# EUROPÄISCHE PATENTANMELDUNG

(11) **EP 1 251 114 A1**
(43) Veröffentlichungstag der Anmeldung: **23.10.2002**
(21) Anmeldenummer: 01109704.5
(22) Anmeldetag: 19.04.2001
(51) Int. Cl.: C04B 41/65

(54) **Verfahren zur Farbgestaltung einer Putz-Oberfläche**

(71) Anmelder: E. Schwenk Putztechnik GmbH & Co. KG, 89077 Ulm (DE)
(72) Erfinder: Flehmig, Christine, 08209 Auerbach (DE); Dietz, Claus-Dieter, 08606 Oelsnitz (DE)
(74) Vertreter: Patentanwälte Leinweber & Zimmermann

(57) **Zusammenfassung**

Die Erfindung betrifft ein Verfahren zur Farbgestaltung einer Putz-Oberfläche, bei dem eine Putzschicht auf einem Träger, wie etwa eine Wand, insbesondere Innenwand eines Gebäudes aufgetragen und die Oberfläche dieser Putzschicht farblich gestaltet wird.

Erfindungsgemäß ist vorgesehen, daß bei der farblichen Gestaltung zunächst Pigmente auf die Oberfläche der Putzschicht aufgebracht und diese Pigmente anschließend in die Putzschicht eingearbeitet werden.

## Beschreibung

Die Erfindung betrifft ein Verfahren zur Farbgestaltung einer Putz-Oberfläche, bei dem eine Putzschicht auf einem Träger, wie etwa eine Wand, insbesondere Innenwand eines Gebäudes, aufgetragen und die Oberfläche dieser Putzschicht farblich gestaltet wird sowie ein zur Ausführung dieses Verfahrens geeignetes Putzsystem.

Bei der Herstellung von Gebäuden, insbesondere Wohngebäuden, werden die Innenund Außenwände üblicherweise verputzt, um ein gefälliges Erscheinungsbild zu erhalten. Die dazu üblicherweise verwendeten kalk-, zement- und/oder gipshaltigen Putze weisen jedoch in der Regel eine optisch wenig ansprechende graue Färbung auf. Aus diesem Grund ist es zum Erhalt des gewünschten Erscheinungsbildes erforderlich, nach dem Auftragen der Putzschicht auf die Wand und einer ggf. als letzter Schritt bei dem Auftragen der Putzschicht erfolgenden Oberflächenstrukturierung einen zusätzlichen Anstrich auf die Oberfläche der Putzschicht aufzubringen.

Durch diesen Anstrich kann jedoch die zuvor ggf. erzeugte Oberflächenstrukturierung der Putzschicht beeinträchtigt werden und ihren Charakter zumindest teilweise verlieren. Ferner kann der Anstrich üblicherweise erst dann aufgebracht werden, wenn die Putzschicht nach Erzeugen der Oberflächenstrukturierung bis zu einem vorgegebenen Grad ausgetrocknet ist. Aus diesem Grund muß zwischen dem Auftragen der Putzschicht und der im Zusammenhang damit ggf. erfolgenden Oberflächenstrukturierung und dem Anstrich eine vorgegebene Standzeit eingehalten werden, wodurch die zum Herstellen der gewünschten Putz-Oberfläche benötigte Zeit entsprechend verlängert wird.

Neben dem vorstehend erläuterten Verfahren zum Herstellen einer gefärbten Putz-Oberfläche sind auch schon solche Verfahren bekannt geworden, bei denen der Putz vor dem Auftragen auf dem Träger durchgefärbt wird. Bei diesen Verfahren hat es sich jedoch gezeigt, daß insbesondere beim Aufbringen entsprechend durchgefärbter Putze auf großflächige Wände Farbschwankungen im Bereich der Putz-Oberfläche auftreten, so daß auch nach Auftragen des durchgefärbten Putzes ein zusätzlicher Egalisierungsanstrich aufgebracht werden muß, um ein optisch ansprechendes Erscheinungsbild zu erhalten. Auch dieser Egalisierungsanstrich kann erst dann aufgetragen werden, wenn die Putzschicht bis zu einem vorgegebenen Grad ausgetrocknet ist.

Angesichts der vorstehend beschriebenen Probleme im Stand der Technik liegt der Erfindung die Aufgabe zugrunde, ein Verfahren zur Farbgestaltung einer Putz-Oberfläche anzugeben, mit dem in kurzer Zeit ein ansprechendes Erscheinungsbild der Putz-Oberfläche erhalten werden kann.

Erfindungsgemäß wird diese Aufgabe durch eine Weiterbildung der bekannten Verfahren gelöst, bei der zur farblichen Gestaltung der Putz-Oberfläche zunächst Pigmente auf die Oberfläche der Putzschicht aufgebracht und diese Pigmente anschließend in die Putzschicht eingearbeitet werden können.

Bei diesem Verfahren kann die Färbung der Putz-Oberfläche bereits unmittelbar nach dem Auftragen der Putzschicht auf dem Träger erfolgen, so daß die ansonsten zur Austrocknung der Putzschicht benötigte Zeit eingespart werden kann. Ferner ermöglicht die Einarbeitung der Pigmente in die noch nicht ausgetrocknete Oberfläche der Putzschicht eine gleichmäßige Verteilung dieser Pigmente auf bzw. in der Putz-Oberfläche, so daß auch die bei der Verwendung durchgefärbter Putze auftretenden Farbschwankungen vermieden werden können.

In diesem Zusammenhang ist es auch nicht erforderlich, daß die Pigmente auf der gesamten Oberfläche der Putzschicht aufgebracht werden. Vielmehr reicht es aus, wenn die Pigmente nur an diskreten Stellen, vorzugsweise etwa punktförmig, auf die Oberfläche der Putzschicht aufgebracht werden und die gleichmäßige Verteilung der Pigmente in der Oberfläche erst durch den anschließenden Schritt der Einarbeitung der Pigmente in die Putzschicht bewirkt wird.

Als besonders günstig hat es sich erwiesen, wenn die Verteilung der auf die Oberfläche der Putzschicht aufgebrachten Pigmente in einem Arbeitsgang mit der ggf. gewünschten Strukturierung der Oberfläche der Putzschicht erfolgt. In diesem Zusammenhang können übliche Werkzeuge verwendet werden, beispielsweise eine Schwammscheibe. Auf diese Weise wird eine weitere Verkürzung der zum Herstellen des gewünschten optischen Erscheinungsbildes der Putz-Oberfläche benötigten Zeit ermöglicht. Ferner wird durch die Kombination der Einarbeitung der Pigmente in die Putzschicht mit der Oberflächenstrukturierung der Putzschicht vermieden, daß die gewünschte Oberflächenstruktur durch die Färbung der Oberfläche beeinträchtigt wird, bzw. ihren Charakter verliert. Vielmehr entsteht unter Einsatz des erfindungsgemäßen Verfahrens nach Austrocknung des Systems eine farbig gestaltete Oberfläche, die in vollem Umfang die Struktur des Putzes widerspiegelt, wobei die farbig gestaltete Oberfläche auch ohne einen Anstrich als zusätzlichen Arbeitsschritt erhalten wird.

Als besonders günstig hat es sich erwiesen, wenn die Pigmente in Form einer Pigmentpaste aufgebracht werden, weil sich eine derartige Paste besonders günstig verarbeiten läßt und eine gleichmäßige Verteilung der Pigmente in der Putzoberfläche bei der späteren Einarbeitung bzw. Strukturierung ermöglicht. Die Pigmentpaste kann insbesondere auch erst vor Ort unter Verwendung eines vorgegebenen Pigmentpulvers hergestellt werden. Dieses Pulver kann vom Hersteller des Putzsystems mitgeliefert werden.

Wie der vorstehenden Erläuterung erfindungsgemäßer Verfahren zu entnehmen ist, weist ein zur Ausführung dieser Verfahren geeignetes Putzsystem im wesentlichen einen Putz und ein zur Herstellung einer Pigmentpaste geeignetes Pigmentpulver auf.

## Patentansprüche

1. Verfahren zur Farbgestaltung einer Putz-Oberfläche, bei dem eine Putzschicht auf einem Träger, wie etwa eine Wand, insbesondere Innenwand eines Gebäudes aufgetragen und die Oberfläche dieser Putzschicht farblich gestaltet wird, **dadurch gekennzeichnet, daß** bei der farblichen Gestaltung zunächst Pigmente auf die Oberfläche der Putzschicht aufgebracht und diese Pigmente anschließend in die Putzschicht eingearbeitet werden.

2. Verfahren nach Anspruch 1, **dadurch gekennzeichnet, daß** die Pigmente an diskreten Stellen, vorzugsweise etwa punktförmig auf die Oberfläche der Putzschicht aufgebracht werden.

3. Verfahren nach Anspruch 1 oder 2, **dadurch gekennzeichnet, daß** die Oberfläche der Putzschicht strukturiert wird und die Einarbeitung der Pigmente bei dem Schritt der Oberflächenstrukturierung erfolgt.

4. Verfahren nach einem der vorhergehenden Ansprüche, **dadurch gekennzeichnet, daß** die Pigmente in Form einer Pigmentpaste aufgebracht werden.

5. Verfahren nach Anspruch 4, **dadurch gekennzeichnet, daß** die Pigmentpaste zur Verwendung eines vorgegebenen Pigmentpulvers angemischt wird.

6. Putzsystem zur Ausführung eines Verfahrens nach einem der vorhergehenen Ansprüche, **gekennzeichnet durch** einen Putz, wie etwa einen kalk-, zement- und/oder gipshaitigen Putz, und einem zur Herstellung einer auf die Oberfläche einer Putzschicht auftragbaren Pigmentpaste geeignetem Pigmentpulver.
